# EUROPÄISCHE PATENTSCHRIFT

(11) **EP 2 864 658 B1**
(45) Veröffentlichungstag und Bekanntmachung des Hinweises auf die Patenterteilung: **31.08.2016**
(21) Anmeldenummer: 13727143.3
(22) Anmeldetag: 05.06.2013
(51) Int. Cl.: F16G 1/10, F16G 5/08

(54) **ARTIKEL, INSBESONDERE ANTRIEBSRIEMEN, MIT EINER TEXTILAUFLAGE**
ARTICLE, IN PARTICULAR DRIVE BELT, COMPRISING A TEXTILE COVERING
ARTICLE, EN PARTICULIER COURROIE D'ENTRAÎNEMENT, MUNI(E) D'UNE COUCHE TEXTILE

(30) Priorität: 25.06.2012 DE 102012105510
(43) Veröffentlichungstag der Anmeldung: 29.04.2015
(73) Patentinhaber: ContiTech Antriebssysteme GmbH, 30165 Hannover (DE)
(72) Erfinder: BALTES, Thomas, 30177 Hannover (DE); FINZELBERG, Jan, 30159 Hannover (DE); KANZOW, Henning, 30419 Hannover (DE); TEVES, Reinhard, 30926 Seelze (DE); MOSES, Reinhold, 37632 Eimen (DE)
(74) Vertreter: Preusser, Andrea
(86) Internationale Anmeldenummer: PCT/EP2013/061522
(87) Internationale Veröffentlichungsnummer: WO 2014/001038

(56) Entgegenhaltungen:
- EP-A1- 0 766 022
- WO-A1-2007/093473
- WO-A2-02/061189
- DE-A1-102010 015 901
- US-A1- 2008 108 466

## Beschreibung

Die Erfindung betrifft einen Artikel mit einem elastischen Grundkörper auf der Basis eines thermoplastischen Elastomers oder eines Vulkanisates mit einer Artikeloberfläche, die mit einer Textilauflage versehen ist.

Ein Artikel, der dynamischen Belastungen und somit einem Verschleiß wie auch Geräuschentwicklungen ausgesetzt ist, ist beispielsweise ein Band, Gurt, Riemen, Schlauch, Luftfederbalg, Kompensator oder eine mehrschichtige Stoffbahn, wobei der Riemen in Form eines Antriebsriemens von besonderer Bedeutung ist. Der Grundkörper des Antriebsriemens umfasst dabei eine Decklage als Riemenrücken und einen Unterbau mit einer Kraftübertragungszone. Diesbezüglich wird insbesondere auf folgende Patentliteratur verwiesen: DE 38 23 157 A1, DE 10 2006 007 509 A1, WO 2005/080821 A1, WO 2006/066669 A1, US 3 981 206 und US 5 417 618.
Die Elastizität eines Antriebsriemens wird dadurch erreicht, dass der Grundkörper und somit die Decklage und der Unterbau aus einem polymeren Werkstoff mit elastischen Eigenschaften bestehen, wobei hier insbesondere die beiden Werkstoffgruppen Elastomere und thermoplastische Elastomere (TPE) zu nennen sind. Von besonderer Bedeutung sind Elastomere auf der Basis einer vulkanisierten Kautschukmischung.

Der elastische Grundkörper ist ferner zumeist noch mit einem eingebetteten Festigkeitsträger bzw. Zugträger versehen, der ein- oder mehrlagig ausgeführt sein kann.

Antriebsriemen als schwerpunktmäßiger Einsatzbereich werden zur Geräuschreduzierung wie auch zur Erhöhung der Abriebsbeständigkeit insbesondere im Bereich der Kraftübertragungszone mit einer Beschichtung versehen. Hierbei kann es sich beispielsweise um eine Flockauflage handeln, wie sie aus DE 38 23 157 A1 bekannt ist, aber auch Folienauflagen sind zum Beispiel aus DE 10 2008 012 044 bekannt. Ebenso können Vliese, bei denen ein loser Faserflor beispielsweise durch Wärme verfestigt wird, eingesetzt werden.

Üblicherweise werden zu Beschichtung allerdings Textilauflagen verwendet. Vor allem Textilauflagen in Form eines Gewebes, bei der die Fläche durch Verkreuzen von zwei Fadensystemen, nämlich Kette und Schuß, hergestellt wird, haben sich in den letzten Jahren auf dem Markt etabliert. Diese werden unter anderem in WO 2011/1103272A1 oder DE 10 2007 062 285 A1.
Ebenso sind Textilauflagen in Form eines Gestrickes oder Gewirkes, bei denen eine mittels Faden gebildete Schleife in eine andere Schleife hineingeschlungen ist, bekannt. Die auf diese Weise entstehenden Maschen können unter Verwendung eines oder mehrer Fäden gebildet werden.
In DE 10 2006 007 509 A1 wird beispielsweise eine Kettwirkware verwendet, die dabei aus einem ersten Garn, insbesondere aus einem Polyamid (PA) oder Polyester (PES), und aus einem zweiten Garn, insbesondere aus einem Polyurethan (PU), besteht. Nachteilig ist, dass auf Prüfmotoren bei Feuchtigkeit unerwünschte Geräusche entstehen. Ursächlich hierfür ist die erhöhte Reibung aufgrund von Vulkanisatdurchtritt durch die Maschen, was sich zusätzlich negativ auf die Verschleißfestigkeit auswirkt.
Eine gestrickte Textilauflage ist ebenso in US 3,981,206, US 0,069,589 oder US 4,027,545 offenbart. Der Nachteil ist hierbei ebenso, dass auf Prüfmotoren bei Feuchtigkeit Geräusche entstehen. Des Weiteren sind die dort beschriebenen Kombinationsfäden nicht dauerhaft beständig, so dass die gesamte Textilauflage häufig brüchig wird.
Realtiv offenmaschige Gestricke bzw. Gewirke als Textilauflage für Antriebsriemen sind unter anderem aus DE 600 25 843 T2, US 2008/0108466A1, WO 2010/057711A1 oder US 5,645,504 bekannt. Die Offenmaschigkeit gewährleistet eine verbesserte Anbindung der Textilauflage an die Oberfläche des Riemens, da während der Vulkanisation Gummi bzw. Vulkanisat durch die Maschen durchdringen kann. Dabei entsteht eine so genannte Rippenstruktur, beispielsweise eine 1x1 Rippenstruktur in US 5,645,504 oder eine 2x2 Rippenstruktur in US 2008/0108466A1. Nachteilig ist hierbei, dass diese Rippen selbst und der dadurch bedingte Vulkanisatdurchtritt die Reibung erhöhen, was wiederum zu unerwünschter Geräuschbildung führt und auch die Lebensdauer des Riemens negativ beeinträchtigt wird.

EP 0 766 022 (Familienmitglied von US 5,645,504) offenbart die Merkmale des Oberbergriffs von den Ansprüchen 1 und 3.

Aufgabe der vorliegenden Erfindung ist es daher, einen Artikel, insbesondere einen Antriebsriemen, mit einer Textilauflage bereitzustellen, der sich durch eine gute Haftung zur Artikeloberfläche bei gleichzeitig günstigem Geräuschverhalten und optimierter Verschleißfestigkeit bzw. optimiertem Reibkoeffizient auszeichnet.

Gelöst wird diese Aufgabe dadurch, dass die Textilauflage eine plattierte Maschenware ist. Durch die Verwendung der plattierten Maschenware ist es überraschenderweise möglich, die Eigenschaften des mit der Textilauflage versehenen Artikels, insbesondere eines Antriebsriemens, zur Artikelinnenseite und gleichzeitig zur Artikelaußenseite zu steuern. Zur Artikelinnenseite lässt sich somit beispielsweise die Haftung zum Vulkanisat optimieren, während gleichzeitig zur Artikelaußenseite ein optimiertes Geräuschverhalten bei guter Verschleißfestigkeit eingestellt werden kann.

Plattierte Maschenware bedeutet, dass die Maschen aus wenigstens zwei Fäden auf eine solche Art gebildet werden, dass ein Faden auf der rechten Warenseite liegt (Plattierfaden, auch Deckfaden genannt), während der zweite Faden auf der linken Warenseite liegt (plattierter Faden). Zusätzlich kann gegebenenfalls wenigstens ein weiterer zusätzlicher Faden zur Stabilisierung der Maschenware im Verarbeitungsprozess vorhanden sein.

Die Maschenware kann als Gestrick oder Kettwirkware ausgebildet sein, wobei vorteilhafterweise ein Gestrick verwendet wird.

Nach einer Variante der Erfindung ist das Gestrick als Rechts-Rechts-Gestrick, Links-Links-Gestrick , besonders bevorzugt als Rechts-Links-Gestrick ausgeführt.

Im Falle eines Gestrickes bedeutet dies, dass jeweils ein Faden nur auf der rechten Gestrickseite läuft und ein weiterer zweiter Faden nur auf der linken Gestrickseite läuft.

Als zusätzlicher dritter Faden kann beispielsweise ein dünnes Elastangarn eingesetzt werden, das nur geringe Auswirkung auf die Oberflächeneigenschaften hat, das es während der Vulkanisation zerstört wird. Es dient lediglich zur Stabilisierung der Textilauflage im Verarbeitungsprozeß.

Mit den oben genannten Maßnahmen ist es nun zum Beispiel möglich, eine verschleißarme Oberfläche aus Polyamaid PA 6.6 mit den geräuschdämmenden Eigenschaften und dem guten Nassgriff eines Baumwollgarns zu kombinieren. Die Kombination von PA 6.6. und Baumwolle ist daher besonders bevorzugt.

Weitere Kombinationen können sein:
- Der erste Faden ist ausgewählt aus der Gruppe, enthaltend Naturfasern, wie Baumwolle, Sisal, Hanf, Leinen, Seide, und Rayon und Polyvinylakohol und Polyimid. Diese zeigen besonders gute Eigenschaften hinsichtlich Haftung, Geräuschverhalten und Nassgriff und werden daher bevorzugt als Faden für die Seite der Textilauflage verwendet, die dem Vulkanisat zugewandt ist.
- Der zweite Faden ist ausgewählt aus der Gruppe, enthaltend Polyamide, wie PA 6.6, PA 12, PA 6, und Polyester, wie UHMWPE, und Polyethylenteraphthalate und Polyphenylensulfide und Aramide und Polyetherketone und Polybenzoxazole und Polypropylene. Diese zeigen besonders gute Eigenschaften hinsichtlich Verschleißfestigkeit und Reibkoeffizient und werden daher bevorzugt als Faden für die Seite der Textilauflage verwendet, die sich auf der Artikelaußenseite befindet.

Die genannten Materialien können in beliebigen Kombinationen verwendet werden, je nach dem zu erzielenden Eigenschaften. Ebenso können, je nach gewünschter Eigenschaft, die einzelnen Fäden als Stapelfasern oder Filamentfasern ausgebildet sein.

Die plattierte Maschenware kann einlagig oder mehrlagig ausgebildet sein.

Es kann die Oberseite und / oder die Unterseite des Artikels mit der plattierten Maschenware beschichtet sein.

Handelt es sich bei dem Artikel um einen Antriebsriemen, insbesondere einen Keilrippenriemen, so ist vorzugsweise die Rippenseite mit der plattierten Maschenware beschichtet. Es ist aber auch möglich, dass zusätzlich die Decklage mit der plattierten Maschenware beschichtet ist.

Je nach Dicke der übereinander plattierten Fäden ist es nach der Ausformung des Antriebsriemens möglich, dass an der Oberfläche auch Teile des unten liegenden Fadens sichtbar sind, so dass beide Fäden in unterschiedlichem Maße die Oberflächeneigenschaften beeinflussen können. Dies macht eine weitere individuelle Einstellung der Riemeneigenschaften möglich.
Der Einsatz einer wendeplattierten Maschenware ist ebenso denkbar.

Ein etwaiger Vulkanisatdurchtritt kann durch die Zahl der Maschenreihen variabel beeinflusst werden. Dies geschieht z.T. auch in Abhängigkeit vom Fadendurchmesser. Bevorzugt beträgt die Maschenreihenzahl zwischen 15 und 35, besonders bevorzugt zwischen 25 und 35. Abweichungen nach oben und unten sind hierbei abhängig vom Fadendurchmesser denkbar.

Die Maschenware kann zusätzlich auf der der Artikelseite zugewandten Seite mit einem Haftmittel versehen sein. Auch kann es mit einer Polymerlösung getränkt sein, insbesondere unter dem Aspekt der Veränderung des CoF-Wertes. Vorteilhaft ist hier auch die Verwendung einer Polymerschicht, insbesondere einer Polymerfolie, wobei diese bevorzugt auf Basis von Polyethylen ist.

Das Haftmittel und/oder die Polymerlösung kann zudem noch ein Trockenschmiermittel enthalten, und zwar bei der Polymerlösung insbesondere zur Senkung des Reibbeiwertes. Das Trockenschmiermittel ist vorzugsweise ein Fluorkunststoff, wie beispielsweise Polytetrafluorethylen (PTFE) und / oder Polyvinylfluorid (PVF) und / oder Polyvinylidenfluorid (PVDF), wobei insbesondere Polytetrafluorethylen (PTFE) zu nennen ist.

Das Haftmittel und/oder die Polymerlösung kann/können ferner elektrisch leitfähig ausgeführt sein, insbesondere auf der Basis von Ruß und/oder Graphit und/oder eines Metallzusatzes. Von besonderer Bedeutung ist dabei der Einsatz eines elektrisch leitfähigen Rußes.

Die nach außen weisende Oberfläche der plattierten Maschenware kann noch mit einer zusätzlichen Beschichtung versehen sein. Bevorzugt ist sie allerdings frei von einer zusätzlichen Beschichtung.

Die plattierte Maschenware gelangt insbesondere bei der Herstellung eines Bandes, Gurtes, Riemens, Schlauches, Luftfederbalges (Axialbalg, Kreuzlagenbalg), Kompensators oder einer mehrschichtigen Stoffbahn zur Anwendung. Von besonderer Bedeutung ist der Einsatz bei der Herstellung eines Antriebsriemens, der konstruktiv als Flachriemen, Keilriemen, Keilrippenriemen, Zahnriemen, Kupplungsriemen oder Aufzugsriemen ausgebildet sein kann..

Die Erfindung wird nun anhand von Ausführungsbeispielen unter Bezugnahme auf eine schematische Querschnittsdarstellung beschrieben.

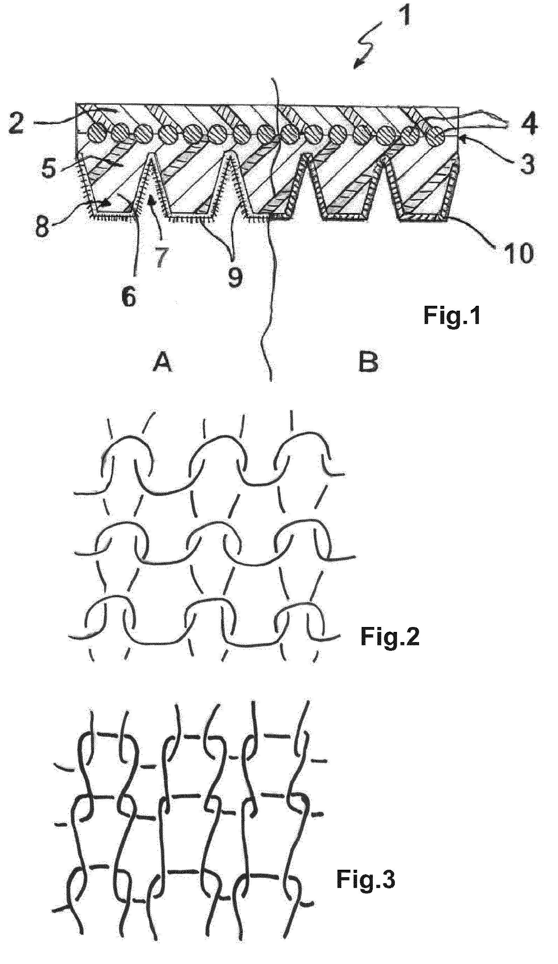

Die erste Figur (Fig.1) zeigt einen Antriebsriemen 1 in Form eines Keilrippenriemens mit einer Decklage 2 als Riemenrücken, einer Festigkeitsträgerlage 3 mit in Längsrichtung verlaufenden parallel angeordneten Zugträgern 4 sowie mit einem Unterbau 5. Der Unterbau weist eine Keilrippenstruktur auf, gebildet aus Rippen 6 und Rillen 7. Der Unterbau umfasst dabei die Kraftübertragungszone 8.

Die Decklage 2 und der Unterbau 5 bilden dabei als Gesamteinheit den elastischen Grundkörper auf der Basis eines thermoplastischen Elastomers oder auf der Basis eines Vulkanisates, insbesondere in Form einer vulkanisierten Kautschukmischung, enthaltend wenigstens eine Kautschukkomponente und Mischungsingredienzien. Als Kautschukkomponente wird insbesondere ein Ethylen-Propylen-Mischpolymerisat (EPM), ein Ethylen-Propylen-Dien-Mischpolymerisat (EPDM), (teil)hydrierter Nitrilkautschuk (HNBR), Chloropren-Kautschuk (CR),

Fluor-Kautschuk (FKM), Naturkautschuk (NR), Styrol-Butadien-Kautschuk (SBR) oder Butadien-Kautschuk (BR) eingesetzt, die unverschnitten oder mit wenigsten einer weiteren Kautschukkomponente, insbesondere mit einem der vorgenannten Kautschuktypen, verschnitten sind, beispielsweise in Form eines EPM/EPDM- oder SBR/BR-Verschnittes. Von besonderer Bedeutung ist dabei EPM oder EPDM oder ein EPM/EPDM-Verschnitt. Die Mischungsingredienzien umfassen dabei wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe, beispielsweise Fasern und Farbpigmente. Diesbezüglich wird auf den allgemeinen Stand der Kautschukmischungstechnologie verwiesen.

Die Zugträger 4 sind insbesondere Einzelcorde, beispielsweise aus Stahl, Polyamid, Aramid, Polyester, Glasfasern, Polyetheretherketon (PEEK) oder Polethylen-2,6-naphthalat (PEN).

Innerhalb der Kraftübertragungszone 8 ist der Antriebsriemen 1 nach dem Stand der Technik mit einer Flockauflage 9 (Abschnitt A) versehen.

Im Vergleich hierzu weist der erfindungsgemäße Antriebsriemen 1 innerhalb seiner Kraftübertragungszone 8 die erfindungsgemäße plattierte Maschenware 10 (Abschnitt B) auf, wodurch sich die Eigenschaften des Riemens individuell einstellen lassen.

Die Decklage 2 des Antriebsriemen 1 kann unbeschichtet sein. Häufig wird auch diese Decklage mit einer Beschichtung versehen. Zumeist genügt dabei eine Beschichtung nach dem Stand der Technik. Diesbezüglich wird auf die Beschreibungseinleitung verwiesen. Die Decklage 2 kann jedoch auch mit der plattierten Maschenware ausgestattet sein, was jedoch im Gegensatz zur Kraftübertragungszone 8 nicht unbedingt erforderlich ist.

Fig. 2 und Fig. 3 zeigen jeweils ein Rechts-Links-Gestrick. Fig.2 zeigt hierbei die linke Seite des Gestricks und Fig. 3 die rechte Seite des Gestricks.

### Bezugszeichenliste

### (Teil der Beschreibung)

- 1: Antriebsriemen (Keilrippenriemen)
- 2: Decklage (Riemenrücken)
- 3: Festigkeitsträgerlage
- 4: Zugträger in Form von Einzelkorden
- 5: Unterbau
- 6: Rippen
- 7: Rillen
- 8: Kraftübertragungszone
- 9: Flockauflage (Abschnitt A)
- 10: plattierte Maschenware (Abschnitt B)

## Patentansprüche

1. Artikel (1) mit einem elastischen Grundkörper auf der Basis wenigstens eines thermoplastischen Elastomers oder auf der Basis eines Vulkanisates mit einer Artikeloberfläche, die mit einer Textilauflage (10) versehen ist, **dadurch gekennzeichnet, dass** die Textilauflage (10) eine plattierte Maschenware ist.

2. Artikel nach Anspruch 1, **dadurch gekennzeichnet, dass** dieser ein Band, Gurt, Riemen, Schlauch, Luftfederbalg, Kompensator oder eine mehrschichtige Stoffbahn ist.

3. Artikel in Form eines Antriebsriemens (1) mit einem elastischen Grundkörper auf der auf der Basis wenigstens eines thermoplastischen Elastomers oder auf der Basis eines Vulkanisats, umfassend eine Decklage (2) als Riemenrücken und einen Unterbau (5) mit einer Kraftübertragungszone (8), wobei die Decklage und/oder die Kraftübertragungszone mit einer Textilauflage (10) versehen ist/sind, **dadurch gekennzeichnet, dass** die Textilauflage (10) eine plattierte Maschenware ist.

4. Artikel nach Anspruch 3, **dadurch gekennzeichnet, dass** der Antriebsriemen (1) als Flachriemen, Keilriemen, Keilrippenriemen, Zahnriemen, Kupplungsriemen oder Aufzugsriemen ausgebildet ist.

5. Artikel nach einem der Ansprüche 1 bis 4, **dadurch gekennzeichnet, dass** die plattierte Maschenware (10) wenigstens zwei unterschiedliche Fäden aufweist, die sich in ihrem Material voneinander unterscheiden.

6. Artikel nach einem der Ansprüche 1 bis 5, **dadurch gekennzeichnet, dass** die plattierte Maschenware (10) wenigstens aus Baumwolle und Polyamid aufgebaut ist.

7. Artikel nach Anspruch 6, **dadurch gekennzeichnet, dass** das Polyamid PA6.6 ist.

8. Artikel nach einem der Ansprüche 1 bis 7, **dadurch gekennzeichnet, dass** die plattierte Maschenware (10) ein Gestrick oder eine Kettwirkware ist.

9. Artikel nach Anspruch 8, **dadurch gekennzeichnet, dass** das Gestrick ein Rechts-Links Gestrick ist.

## Claims

1. Article (1) having an elastic main body based on at least one thermoplastic elastomer or on a vulcanizate and having an article surface bearing a textile covering (10), **characterized in that** the textile covering (10) is a plated knitted fabric.

2. Article according to Claim 1, **characterized in that** it is a band, a strap, a belt, a hose, an air spring lobe, a compensator or a multilayered web.

3. Article in the form of a drive belt (1) having an elastic main body based on at least one thermoplastic elastomer or on a vulcanizate, comprising a top ply (2) as belt spine and a substructure (5) with a force transmission zone (8), wherein a textile covering (10) is provided to the top ply and/or to the force transmission zone, **characterized in that** the textile covering (10) is a plated knitted fabric.

4. Article according to Claim 3, **characterized in that** the drive belt (1) is configured as a flat belt, as a V-belt, as a V-ribbed belt, as a toothed belt, as a clutch belt or as an elevator belt.

5. Article according to any of Claims 1 to 4, **characterized in that** the plated knitted fabric (10) includes at least two different threads which differ from each other in their materials.

6. Article according to any of Claims 1 to 5, **characterized in that** the plated knitted fabric (10) is constructed of cotton and polyamide at least.

7. Article according to Claim 6, **characterized in that** the polyamide is nylon-6,6.

8. Article according to any of Claims 1 to 7, **characterized in that** the plated knitted fabric (10) is a weft-knitted fabric produced with independently movable needles or in a warp-knitted fabric.

9. Article according to Claim 8, **characterized in that** the weft-knitted fabric produced with independently movable needles is plain single jersey.

## Revendications

1. Article (1) comprenant un corps de base élastique à base d'au moins un élastomère thermoplastique ou à base d'un vulcanisat, comprenant une surface d'article qui est munie d'un revêtement textile (10), **caractérisé en ce que** le revêtement textile (10) est un article tricoté vanisé.

2. Article selon la revendication 1, **caractérisé en ce que** celui-ci est une bande, une sangle, une courroie, un tuyau, un soufflet à air, une compensateur ou une bande multicouche.

3. Article sous la forme d'une courroie d'entraînement (1) comprenant un corps de base élastique à base d'au moins un élastomère thermoplastique ou à base d'un vulcanisat, comprenant une couche supérieure (2) en tant que dos de courroie et une couche de base (5) comprenant une zone de transfert de force (8), la couche supérieure et/ou la zone de transfert de force étant munies d'un revêtement textile (10), **caractérisé en ce que** le revêtement textile (10) est un article tricoté vanisé.

4. Article selon la revendication 3, **caractérisé en ce que** la courroie d'entraînement (1) est configurée sous la forme d'une courroie plate, d'une courroie trapézoïdale, d'une courroie trapézoïdale à nervures, d'une courroie dentée, d'une courroie d'accouplement ou d'une courroie de levage.

5. Article selon l'une quelconque des revendications 1 à 4, **caractérisé en ce que** l'article tricoté vanisé (10) comprend au moins deux fils différents qui diffèrent au niveau de leur matériau.

6. Article selon l'une quelconque des revendications 1 à 5, **caractérisé en ce que** l'article tricoté vanisé (10) est formé au moins à partir de coton et de polyamide.

7. Article selon la revendication 6, **caractérisé en ce que** le polyamide est le PA6.6.

8. Article selon l'une quelconque des revendications 1 à 7, **caractérisé en ce que** l'article tricoté vanisé (10) est un tricot ou un article tricoté à chaîne.

9. Article selon la revendication 8, **caractérisé en ce que** le tricot est un tricot monofonture.
